# EUROPEAN PATENT SPECIFICATION

(11) **EP 3 030 814 B1**
(45) Date of publication and mention of the grant of the patent: **23.08.2017**
(21) Application number: 14749949.5
(22) Date of filing: 16.07.2014
(51) Int. Cl.: F16J 15/3296, B64C 25/60, F16F 9/36

(54) **AN APPARATUS COMPRISING A SEALING ELEMENT**
VORRICHTUNG MIT ABDICHTELEMENT
APPAREIL COMPRENANT UN ÉLÉMENT D'ÉTANCHÉITÉ

(30) Priority: 06.08.2013 GB 201314046
(43) Date of publication of application: 15.06.2016
(73) Proprietor: Safran Landing Systems UK Ltd, Gloucester, Gloucestershire GL2 9QH (GB)
(72) Inventor: VATOVEC, Andraz, Andoversford Gloucestershire GL54 4LY (GB); PADDOCK, Andrew, Ellwood Nr Coleford Gloucestershire GL16 7L2 (GB)
(74) Representative: Latham, Stuart Alexander
(86) International application number: PCT/GB2014/052168
(87) International publication number: WO 2015/019049

(56) References cited:
- EP-A2- 0 036 727
- WO-A2-98/04776
- DE-A1-102011 082 574
- FR-A1- 2 880 667
- GB-A- 1 325 940
- US-A- 3 842 792

## Description

### FIELD OF THE INVENTION

This invention relates to an apparatus comprising a sealing element such as a dynamic seal or a bearing.

### BACKGROUND TO THE INVENTION

Dynamic seals (seals placed between two objects that move relative to one another) are subject to wear throughout their lifetime. For example, a seal coupled to the piston housing of a shock absorber will experience abrasion as it slides over the shock absorber's piston. When designing dynamic seals for shock absorbers used in aircraft landing gear, a conservative approach is usually taken. The seals are designed such that they are sufficiently durable to last for the lifetime of the component into which they are integrated or until an overhaul of that component is scheduled. However, depending on the circumstance, each landing gear is subject to different in-service conditions and, as such, each landing gear shock absorber is subject to a differing amount of accumulative travel. Some landing gears may therefore be subject to more accumulative shock absorber travel than predicted and as a consequence, excessive seal wear may lead to seal leakage and therefore a loss of shock absorber function.

GB 1,325,940 describes a mechanical face seal comprising two components, namely an axially fixed annular seat and an axially movable annular seal face member urged axially into face-to-face rubbing contact with the seat. A cylindrical surface associated with the seal face member telescopes with respect to an axially fixed cylindrical surface, the inner one of these two surfaces bearing adjacent external contrastingly coloured annular bands, placed so that the boundary between these bands is normally concealed from view to an outside observer but is uncovered when the seal face member has moved axially, through wear, to a degree such that it is shortly due for replacement.

### SUMMARY OF THE INVENTION

According to a first aspect of the invention, there is provided an apparatus according to claim 1.

The sealing element may be a seal or a bearing. Where the sealing element is a seal, the wear indicator may be integrated into the seal. Alternatively, where the sealing element is a bearing, the wear indicator may be integrated into the bearing. The bearing may, for instance, have some sealing properties due to its position relative to the second part of the apparatus.

The apparatus may be a shock absorber or an actuator, in which the first part is a chamber and the second part is a piston slidingly disposed within the chamber. Alternatively, the apparatus may be a journal bearing in which the first part is a collar and the second part is a journal or shaft rotatably mounted within the collar. In both cases, the sealing element may be disposed between the first and second parts, the second part moveable either linearly or by rotation relative to the first part and the sealing element. The apparatus may, in particular, be incorporated in to aircraft and more specifically, aircraft landing gear.

The wear indicator may comprise an indent, or notch or groove in the top surface of the sealing element situated a predetermined distance from the edge of the sealing element in contact with the second part. Accordingly, as the sealing element is abraded by the second part, the level of wear can be monitored relative to the indent. In addition or alternatively, portions of the wear indicator may comprise material having different aesthetic properties to that of the remainder of the sealing element. For example, a portion of differing material may be situated at the edge of the sealing element in contact with the second part such that once worn away, a visual inspection of the sealing element would indicate that the sealing element has abraded to an unacceptable level requiring the sealing element to be replaced. A plurality of portions of the sealing element may be provided each having different aesthetic properties and being positioned at different distances from the inside edge of the sealing element in order to increase the accuracy of the indication of wear.

Optionally, indents may be provided between respective differing material portions of the wear indicator to further define the areas having different aesthetic properties.

The apparatus further comprise one or more flanges proximal to an outer surface of the second part, thus providing a barrier to prevent debris from entering any interior enclosure defined by the second part, in which the flange has one or more windows to allow visual inspection of the wear indicator. The windows may be in the form of a recess or hole in the flange and may optionally be filled with a transparent material such that debris cannot pass through the window. Optionally, an element such as a door may be provided to cover one or more of the windows during times where visual inspection of the wear indicator is not required.

According to a second aspect of the invention, there is provided an aircraft or aircraft landing gear comprising an apparatus as described above.

### BRIEF DESCRIPTION OF THE DRAWINGS

Embodiments of the present invention will now be described, by non-limiting example only, with reference to the accompanying drawings, in which:
Figure 1 is a cross section of a piston and housing arrangement including a sealing element;
Figure 2 is a cross section of the arrangement shown in Figure 1 showing the sealing element in more detail;
Figure 3 is a close up cross section of an apparatus according to an embodiment of the present invention including a sealing element;
Figure 4 is a top view of the apparatus shown in Figure 3;
Figure 5 is a top view of a variation of the apparatus shown in Figures 3 and 4;
Figure 6 is a cross sectional view of a further variation of the apparatus shown in Figures 3 and 4;
Figure 7 is a cross sectional view of a further variation of the apparatus shown in Figures 3 and 4;

### DESCRIPTION OF EMBODIMENTS OF THE INVENTION

Wear in aircraft landing gear shock absorbers and actuators can currently not easily be inspected when the landing gear is in service. Accordingly, sealing elements are often over-engineered to accommodate for excess wear due to variations in in-service conditions. Embodiments of the present invention enables straightforward, in-service inspection of wear which may take place as part of a normal landing gear check by an engineer or safety inspector.

The present invention will now be described with reference to a shock absorber which may be present in an aircraft landing gear. It will, however, be appreciated that the present invention may also be applicable to any system in which a dynamic seal is placed against a sliding or rotating body. For example, seal wear indicators described in the following passages may be implemented on seals for actuators and/or seals in bearings and journal arrangements in which a rod rotates within a collar. Equally, embodiments of the present invention are not limited to use with dynamic seals per se. For instance, embodiments described herein may be incorporated into any element placed against a sliding or rotating body, such as bearings not having seals incorporated therein, but instead having inherent sealing characteristics. Accordingly, the term "sealing element", in addition to including dynamic seals, may include bearings which themselves may have some innate sealing property due to their proximity to sliding or rotating bodies. An example of such a configuration is the bearing situated within a shock absorber operable to maintain a rod in a central orientation relative to a housing. The bearing may be subject to wear due to friction between its inner edge and the piston rod. Wear indicators described herein may be integrated into the bearing as described in the same way as described below for dynamic seals.

It will also be appreciated that whilst embodiments of the present invention are described with reference to aircraft landing gear components, the present invention may be equally applicable in areas outside of the aerospace field.

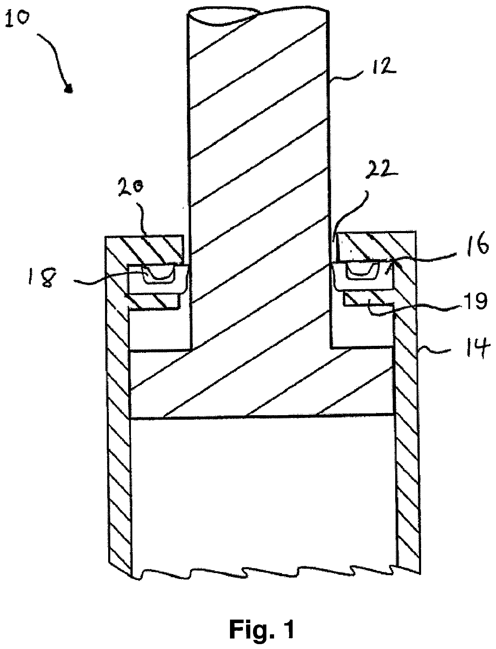

Figure 1 shows a cross section of a conventional shock absorber 10 comprising a piston 12 slidingly disposed within a cylinder 14. In order to prevent dirt and other contaminants from entering the internals of the chamber 14, a dynamic seal 16 known in the art as a scraper seal or an extruder seal is provided at the neck of the cylinder 14. The seal 16 is coupled to or integrated into the cylinder 14 so that its position is fixed relative to the cylinder 14. A flange 20 is provided at the neck of the cylinder 14 which prevents extrusion of the seal outside of the chamber 14 during relative movement of the piston 12 and cylinder 14. A lower flange 19 may also be provided below the seal 16 such that the flange 20 and lower flange 19 prevent movement of the seal 16 relative to the longitudinal axis of the cylinder. In such circumstances, the seal 16 may be installed into the grove formed by the flange 20 and lower flange 19, the seal 16 preferably having a very tight fit. The flange 20 also prevents larger objects from entering the cylinder 14 through the gap between the outer surface of the piston 12 and the inner surface of the cylinder 14. The flange 20 extends so that it is proximal to the outer surface of the piston 12, leaving a very small gap 22 between the inner edge of the flange and the outer circumference of the piston 12. This gap 22 may be engineered to accommodate for deflections in the piston 12 during normal use such that during maximum lateral deflection of the piston 12, it does not come into contact with the flange 20. In addition or alternatively, the gap 22 may be engineered to prevent extrusion of the seal 16 into the gap 22 due to relative movement of the seal 16 and the piston 12.

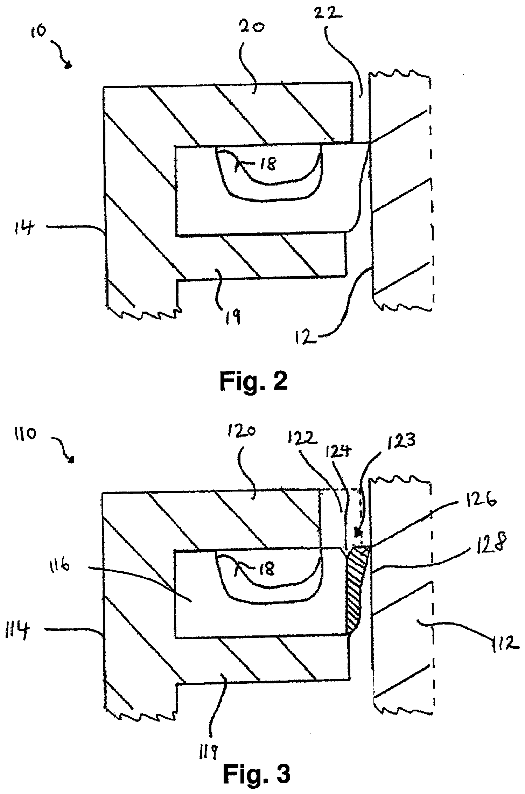

The seal is biased into contact with the outer surface of the piston 12 preferably by an energiser 18 integrated into the seal 16, as shown in more detail in Figure 2. The energiser 18 may be made from a metal spring or an elastomer or any other method known in the art could be used to energise the seal 16 so that it remains in contact with the piston 12. As the piston 12 slides in and out of the cylinder 14 the outer surface of the piston 12 rubs against the seal 16 which, in addition to preventing contaminants from entering the cylinder 14, also causes the seal 16, which is made of a softer material than the piston 12, to abrade due to friction between the seal 16 and the piston 12. The seal 16 is preferably made of a single compound which is chosen so as to be best suited for the sealing or scraping function as required by the application. This material is preferably chosen so as to provide sufficient wear characteristics such that the seal 16 lasts for the lifetime of the shock absorber or until the next overhaul of the shock absorber or landing gear is scheduled. Equally, the material is prefeably soft enough to perform the required sealing function for any particular application. Accordingly, to accommodate for extremes in wear from one shock absorber to the next, the seal 16 is made of a harder, more resilient and thus more expensive material than it would otherwise be required.

Because of the proximal position of the flange 20 relative to the outer circumference of the piston , in normal use the seal 16 is hardly, if not at all, visible from the outside of the shock absorber 10, and so in order to inspect the seal 16, the shock absorber 10 must be removed from service and dismantled.

Referring now to Figure 3, an apparatus comprising a seal 116 in accordance with an embodiment of the present invention is shown. The seal 116 is coupled to or integrated into a cylinder 114 and is biased into contact with a piston 112 of the shock absorber equivalent to that shown in Figures 1 and 2. As with the prior art seal 16, an energiser 118 may be provided to bias the seal 116 into contact with the outer surface of the piston 112. In addition, as with the seal shown in Figures 1 and 2, the seal 116 may be sandwiched between a flange 120 and a lower flange 119 to prevent movement relative to cylinder 114. However in contrast to the prior art seal 12, the seal 116 shown in Figure 3 comprises a wear indicator, generally denoted 123, which provides an indication of the amount of wear that the seal has undergone due to relative movement of the piston 112 and the seal 116.

The seal wear indicator 123 may comprise a notch or indent 124 situated on an outward facing surface, i.e. the surface of the outward facing flat end of the seal 116, at a predetermined distance from the inner edge of the seal 116 such that the wear indicator 123 may be viewed when looking into the neck of the cylinder 114 of the shock absorber 110. Accordingly, as the portion 126 of the seal 116 between the indent 124 and the piston 112 is abraded due to the repeated sliding action of the piston 112 relative to the seal 116, an indication of how much the portion 126 is worn away relative to the notch or indent 124 can be ascertained. Optionally, the indent may comprise a groove running around some or all of the circumference of the seal 116.

In addition or in place of the indent or notch 124, in order to provide an indication of seal wear, the seal 116 may comprise a portion made of a material with different aesthetic characteristics to the remainder of the seal 116, as denoted in Figure 3 by the hatchings 128 in the inner portion 126 of the seal 116. The different material may, for example, be a different colour to the remainder of the seal 116. In addition or alternatively, the inner portion 126 may, for example, comprise a material having a different texture, reflectivity characteristic, or any other suitable physical property. This inner portion 126 of the seal 116 may be only partially made of the differing material 128. For example, inserts of material having different physical characteristics may be integrated into the seal 116 at particular positions around the inner circumference of the seal 116, the remainder of the inner portion 126 comprising the same material as that of the remainder of the seal 116. In any case, as the seal 116 is worn away by relative movement of the piston 112, more and more of the material having different aesthetic characteristics will be worn away and in the extreme, all of this material will be worn from the seal 116 thus providing an indication of wear of the seal 116 due to movement relative to the piston 112.

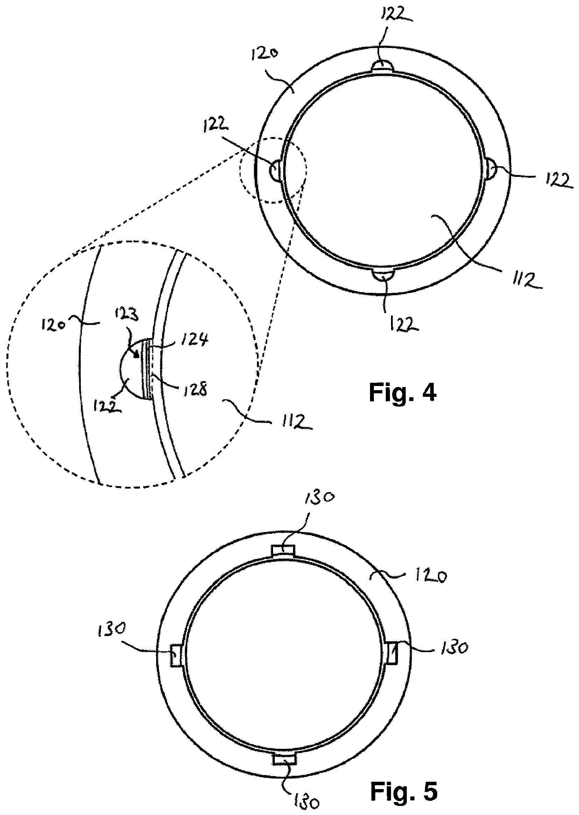

As discussed in connection with the shock absorber 10 shown in Figure 1, a flange 120 is also provided in the embodiment illustrated in Figure 3 to prevent larger objects from entering the cavity of the cylinder 114. However, in contrast to Figure 1, at least a portion of the flange 120 may be cut away to leave a window 122, i.e. a gap, large enough so that the wear indicator can be seen from outside the cylinder casing. As shown in more detail in Figure 4, one or more cutaways 122 may be made in the flange 120 such that small areas of the wear indicator can be seen from outside of the shock absorber 10, whilst the flange still provides protection from larger objects entering the inside of the cylinder 114. In other embodiments, however, the flange 120 may be designed such that the gap between the flange 120 and the piston 112 is made larger around the entirety of the circumference of the piston 112 when compared with the flange 20 in Figures 1 and 2, or the flange 120 may be removed altogether leaving the scraper seal 116 open to the exterior of the shock absorber 10 such that the wear indicator is easily visible from the outside of the shock absorber 10. In such embodiments, the seal 116 may also act as a guard to larger objects entering the inside of the cylinder cavity 114. However, in such an embodiment, the seal may be susceptible to extrusion into the clearance gap between the cylinder 114 and piston 112. Accordingly, such an arrangement is undesirable.

Referring again to Figure 4, cutaways 122 are shown situated at intervals around the inner circumference of the flange 120. It will, however, be appreciated that the flange 120 could comprise any number of cutaways and as little as a single cutaway integrated therein. However, having a plurality of points about the diameter of the shock absorber where seal wear can be monitored enables an inspector to better ascertain whether the piston 112 is abrading the seal unevenly, i.e. in one area more than the remainder of the seal 116. Accordingly, an inspector may be able to ascertain whether or not the piston 112 is off centre or the forces applied to the shock absorber 110 are equally balanced. Any imbalance may then be attended to in order to prevent failure of the shock absorber 10. As can be seen from the magnified area of Figure 4, the wear indicator can be seen clearly from the exterior of the shock absorber 10 through the cutaway 122. This allows for easy and effective evaluation of the seal condition from the exterior of the shock absorber 10.

Figure 5 shows an alternative arrangement in which square cutaways 130 are made into the flange 120. It will be appreciated that any shape or configuration of cutaway may be integrated into the flange 120 as long as the wear indicator 123 of the seal 116 can be seen from the exterior of the shock absorber 110. As discussed above, absence or reduction in width of the flange 120 may equally provide the same effect in accordance with embodiments of the present invention.

In order to further prevent larger objects from entering the cavity of the cylinder 114, the cutaways 112 may be filled with a transparent material such as Perspex (RTM) or glass to provide a window through which an inspector or engineer can see the notch, whilst the flange 120 still provides the full effect of preventing entry of foreign objects into the cavity 114. Alternatively, the cutaways 112 may be plugged with a removable plug made from an opaque material, such as steel or another suitable metal. The plug is preferably locked into configuration with the cutaway until inspection of the wear indicator 123 is required. By plugging the cutaway 112 either with transparent material or with a removable opaque plug, support and protection previously provided by the full flange 20 may be at least partially maintained during times in which the wear indicator is not being inspected, thereby reducing the risk of extrusion and unwanted movement of the seal 116.

In addition or alternatively, a moveable cover (folding, sliding or otherwise) may be integrated into the flange to cover the cutaway(s) 112 when there is no requirement to view the wear indicator 123.

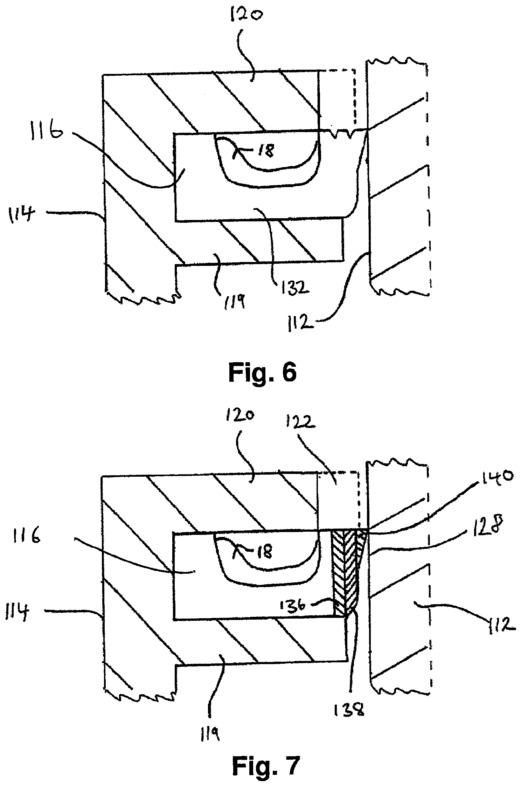

Referring now to Figure 6, a further embodiment of the present invention is shown comprising a seal 132 having a wear indicator 133 comprising multiple notches 134A, 134B. Accordingly, wear of the seal 123 can be measured relative to each of the notches 134A, 134B so that an engineer or inspector can easily identify the level or wear that the seal 132 has undergone to a greater degree of accuracy.

Similarly, referring to figure 7, a seal 134 is shown which comprises a plurality of portions 136, 138, 140, each having a different aesthetic property. For example portion 140 may be green, portion 138 may be orange, and portion 136 may be red, thus showing the level of wear of the seal 134 relative to the boundary of each of the colours. An inspector can therefore easily identify how much of the seal 134 has worn away and thus whether or not there is a requirement to replace the seal 134. Furthermore, by viewing seal wear at a plurality of cutaways 122 around the flange 120, an inspector can quickly identify the amount of uneven wear around the seal 134. It will be appreciated that any combination of features of the wear indicators shown in Figures 6 and 7 could be implemented. For example, a plurality of different colour portions each separated by a respective notch, indent or groove could be used to further define and identify wear in a dynamic seal.

## Claims

1. An apparatus, comprising:
a first part (14) arranged to receive a second part (12); and
a sealing element (16) disposed between the first part and the second part and in contact with the second part, the second part arranged to be moveable relative to the first part and the sealing element, wherein the sealing element comprises a wear indicator (123), and the first part is configured such that the wear indicator is visible external to the apparatus in normal use,
**characterised in that** the first part comprises a flange (20) proximal to an outer surface of the second part, the flange having one or more windows (122) to allow visual inspection of the wear indicator.

2. An apparatus as claimed in claim 1, wherein the sealing element (16) comprises a seal (116) or a bearing.

3. An apparatus as claimed in claims 1 or 2, wherein the apparatus is a shock absorber (10) or an actuator, the first part is a piston housing and the second part is a piston slidingly disposed relative to a chamber of the piston housing.

4. An apparatus according to claims 1 or 2, wherein the first part is a collar and the second part is a rod rotatably mounted within the collar.

5. An apparatus as claimed in any of claims 1 to 3, wherein the wear indicator comprises a first indent (124) in the sealing element arranged to indicate an amount of wear of the sealing element relative to the indent.

6. An apparatus according to claim 5, further comprising one or more additional indents (124) arranged concentrically relative to the first indent.

7. An apparatus as claimed in any preceding claim, wherein the sealing element comprises two or more adjacent portions having different aesthetic appearances and arranged to indicate an amount of wear of the sealing element relative to borders between adjacent portions.

8. An apparatus according to claim 7 wherein at least two of the two or more adjacent portions are separated by indents in the surface of the sealing element.

9. An apparatus as claimed in claim 1, wherein one or more of the windows (122) comprises a recess in the flange (20).

10. An apparatus as claimed in claims 1 or 9, wherein one or more of the windows (122) comprises a transparent material.

11. An apparatus as claimed in claims 1 or 9, further comprising a removable plug adapted to substantially plug the window (122).

12. An apparatus as claimed in any of claims 1 to 11, further comprising an element coupled to the flange, moveable between a first position in which the element covers one or more of the windows and a second position in which the one or more windows is visible from outside of the apparatus.

13. An aircraft landing gear comprising an apparatus according to any preceding claim.

## Patentansprüche

1. Vorrichtung, aufweisend:
ein erstes Teil (14), das angeordnet ist, um ein zweites Teil (12) aufzunehmen; und
ein Dichtelement (16), das zwischen dem ersten Teil und dem zweiten Teil angeordnet ist und in Kontakt mit dem zweiten Teil ist, das zweite Teil ist angeordnet relativ zu dem ersten Teil und dem Dichtelement bewegbar zu sein, wobei das Dichtelement einen Abnutzungsindikator (123) aufweist, und das erste Teil ist derart konfiguriert, dass der Abnutzungsindikator extern der Vorrichtung im normalen Gebrauch sichtbar ist,
**gekennzeichnet dadurch, dass** das erste Teil einen Flansch (20) nah an einer äußeren Oberfläche des zweiten Teils aufweist, der Flansch hat ein oder mehrere Fenster (122), um visuelle Inspektion des Abnutzungsindikators zu ermöglichen.

2. Vorrichtung gemäß Anspruch 1, wobei das Dichtelement (16) eine Dichtung (116) oder ein Lager aufweist.

3. Vorrichtung gemäß Anspruch 1 oder 2, wobei die Vorrichtung ein Stoßdämpfer (10) oder ein Aktuator ist, das erste Teil ist ein Kolbengehäuse und das zweite Teil ist ein Kolben, der gleitbar relativ zu einer Kammer des Kolbengehäuses angeordnet ist.

4. Vorrichtung gemäß Anspruch 1 oder 2, wobei das erste Teil eine Manschette ist und das zweite Teil eine innerhalb der Manschette drehbar befestigte Welle ist.

5. Vorrichtung gemäß einem der Ansprüche 1 bis 3, wobei der Abnutzungsindikator eine erstes Aussparung (124) in dem Dichtelement aufweist, das angeordnet ist, um einen Betrag der Abnutzung des Dichtelements relativ zu der Aussparung anzuzeigen.

6. Vorrichtung gemäß Anspruch 5, weiter aufweisend eine oder mehrere zusätzliche Aussparungen (124), die konzentrisch relativ zu der ersten Aussparung angeordnet sind.

7. Vorrichtung gemäß einem der vorangehenden Ansprüche, wobei das Dichtelement zwei oder mehrere angrenzende Bereiche aufweist, die unterschiedliche ästhetische Erscheinungen haben und angeordnet sind, um einen Betrag der Abnutzung des Dichtelements relativ zu Grenzen zwischen angrenzenden Bereichen anzuzeigen.

8. Vorrichtung gemäß Anspruch 7, wobei mindestens zwei der zwei oder mehreren angrenzenden Bereiche mittels Aussparungen in der Oberfläche des Dichtelements getrennt sind.

9. Vorrichtung gemäß Anspruch 1, wobei ein oder mehrere der Fenster (122) eine Aussparung in dem Flansch (20) aufweisen.

10. Vorrichtung gemäß Anspruch 1 oder 9, wobei ein oder mehrere der Fenster (122) ein transparentes Material aufweisen.

11. Vorrichtung gemäß Anspruch 1 oder 9, weiter aufweisend einen entfernbaren Verschluss, der eingerichtet ist, das Fenster (122) im Wesentlichen zu verschließen.

12. Vorrichtung gemäß einem der Ansprüche 1 bis 11, weiter aufweisend ein mit dem Flansch gekoppeltes Element, das bewegbar zwischen einer ersten Position, in der das Element ein oder mehrere der Fenster abdeckt, und einer zweiten Position ist, in der das eine oder mehrere Fenster von außerhalb der Vorrichtung sichtbar ist.

13. Flugzeugfahrwerk, aufweisend eine Vorrichtung gemäß einem der vorangehenden Ansprüche.

## Revendications

1. Appareil (110) comprenant :
une première partie (14) conçue pour recevoir une seconde partie (12) ; et
un élément d'étanchéité (16) disposé entre la première partie et la seconde partie et en contact avec la seconde partie, la seconde partie étant conçue pour être mobile par rapport à la première partie et à l'élément d'étanchéité, dans lequel l'élément d'étanchéité comprend un témoin d'usure (123) et la première partie étant conçue de sorte que le témoin d'usure (123) soit visible de l'extérieur de l'appareil lors d'une utilisation normale,
**caractérisé en ce que** la première partie comprend une bride (20) proximale à une surface externe de la seconde partie, la bride présentant une ou plusieurs fenêtre(s) (122) afin de permettre un examen visuel du témoin d'usure.

2. Appareil selon la revendication 1, dans lequel l'élément d'étanchéité (16) comprend un joint (116) ou un palier.

3. Appareil selon la revendication 1 ou 2, dans lequel l'appareil est un amortisseur (10) ou un actionneur, la première partie est un logement de piston et la seconde partie est un piston disposé pour coulisser par rapport à une chambre du logement de piston.

4. Appareil selon les revendications 1 ou 2, dans lequel la première partie est un collet et la seconde partie est une tige montée pour tourner à l'intérieur du collet.

5. Appareil selon l'une quelconque des revendications 1 à 3, dans lequel le témoin d'usure comprend un premier creux (124) dans l'élément d'étanchéité agencé pour indiquer une quantité d'usure de l'élément d'étanchéité par rapport au creux.

6. Appareil selon la revendication 5, comprenant en outre un ou plusieurs creux supplémentaire(s) (124) agencé(s) de manière concentrique par rapport au premier creux.

7. Appareil selon l'une quelconque des revendications précédentes, dans lequel l'élément d'étanchéité comprend deux ou plus parties adjacentes ayant des aspects esthétiques différents et agencées pour indiquer une quantité d'usure de l'élément d'étanchéité par rapport aux bordures entre des parties adjacentes.

8. Appareil selon la revendication 7, dans lequel au moins deux parmi les deux ou plus parties adjacentes sont séparées par des creux prévus dans la surface de l'élément d'étanchéité.

9. Appareil selon la revendication 1, dans lequel une ou plusieurs des fenêtres (122) comprend un évidement prévu dans la bride (20).

10. Appareil selon les revendications 1 ou 9, dans lequel une ou plusieurs des fenêtres (122) est/sont constituée(s) d'un matériau transparent.

11. Appareil selon les revendications 1 ou 9, comprenant en outre un bouchon amovible conçu pour sensiblement boucher la fenêtre (122).

12. Appareil selon l'une quelconque des revendications 1 à 11, comprenant en outre un élément couplé à la bride, mobile entre une première position dans laquelle l'élément recouvre une ou plusieurs des fenêtres et une seconde position dans laquelle la ou les fenêtre(s) est/sont visible(s) de l'extérieur de l'appareil.

13. Train d'atterrissage d'avion comprenant un appareil selon l'une quelconque des revendications précédentes.
